# EUROPEAN PATENT APPLICATION

(11) **EP 1 522 886 A1**
(43) Date of publication of application: **13.04.2005**
(21) Application number: 04255868.4
(22) Date of filing: 25.09.2004
(51) Int. Cl.: G02F 1/1335

(54) **Colour liquid crystal display device**

(30) Priority: 07.10.2003 JP 2003348154
(71) Applicant: ALPS ELECTRIC CO., LTD., Ota-ku Tokyo 145 (JP)
(72) Inventor: Yoshii, Katsumasa, c/o Alps Electric Co. Ltd., Tokyo (JP)
(74) Representative: Kensett, John Hinton

(57) **Abstract**

There is provided a colour liquid crystal display device capable of being viewed in clear and natural states of colours with respect to the colour sensitivity of the human eye. A transflective film (12) is formed such that a first set of apertures (32r) corresponding to a first set of red colour filters have the largest size, a second set of apertures (32g) corresponding to a second set of green colour filters have the smallest size, and a third set of apertures (32b) corresponding to a third set of blue colour filters have an intermediate size. Since the size of the apertures (32) is varied in accordance with the colour of the corresponding colour filter, it is possible to control brightness in natural states of colours with respect to the characteristics of colour sensitivity intrinsic to the human eye.

## Description

### BACKGROUND OF THE INVENTION

### 1. Field of the Invention

The present invention relates a colour liquid crystal display device comprising a transflective film.

### 2. Description of the Related Art

In portable electronic apparatuses, such as mobile phones and game devices, since the driving time of a battery largely affects various operating conditions, a transflective liquid crystal display device capable of consuming low power is commonly provided as a display unit. Such a transflective liquid crystal display device typically comprises a transflective film for reflecting external light incident from a front surface thereof and for transmitting light emitted from a backlight unit provided on a rear side of a liquid crystal display panel through apertures formed therein. As a transflective film, there is known a transflective film on which a plurality of minute concave portions or convex portions is formed to optimally increase reflectance (see Japanese Unexamined Patent Application Publication No. 2003-14912).

Among such transflective liquid crystal display devices, a transflective colour liquid crystal display device for colour display comprises colour filters for colour-developing the three primary colours of R, G, and B and a transflective film having apertures for transmitting light emitted from a backlight unit at positions corresponding to the respective colour filters. The colour sensitivity of an average human being is generally represented in a visibility curve, and has a characteristic in that the sensitivity to the light of a red colour group is low and in that the sensitivity to the light of a green colour group is high. Therefore, when the colour liquid crystal display device colour-develops the three primary colours of R, G, and B in the same brightness, colours in the red colour group are perceived darker than its actual brightness, such that there exists a colour that cannot be seen in its natural colour state.

The present invention has been made in consideration of the above-mentioned problem, and an object of the present invention is to provide a colour liquid crystal display device capable of being viewed in clear natural states of colours with respect to the colour sensitivity of the human eye.

According to the present invention there is provided a colour liquid crystal display device comprising a liquid crystal display panel in which each pixel has at least one of an R filter, a G filter, and a B filter for colouring three primary colours of R, G, and B, respectively; an illuminating device for illuminating the liquid display panel from a rear side thereof; and a transflective film formed outside or inside the liquid display panel and having apertures for transmitting light at positions corresponding to the respective pixels of the liquid crystal panel. The transflective film is formed so that, with respect to an aperture ratio of each pixel, an R aperture corresponding to the R color filter has a highest aperture ratio, a G aperture corresponding to the G color filter has a lowest aperture ratio, and a B aperture corresponding to the B color filter has an intermediate aperture ratio.

Generally, the sensitivity of the human eye has a characteristic in that the sensitivity to the light of a red color group is low, and that the sensitivity to the light of a green color group is high. Thus, when the color liquid crystal display device color-develops the three primary colors of R, G, and B in the same brightness, the colors in the red color group are perceived darker than its actual brightness, such that there exists a color that cannot be seen in its natural color state. However, when the aperture ratios of the respective apertures formed in the transflective film are set such that the R aperture corresponding to the R color filter has the highest aperture ratio, the G aperture corresponding to the G color filter has the lowest aperture ratio, and the B aperture corresponding to the B color filter has the intermediate aperture ratio, the brightness of the respective colors is controlled in the order of G light > B light > R light.

According to such a construction, the three primary colors of R, G, and B that are fully color-developed are compensated to the brightness corresponding to the characteristics of the human eye, such that an image reproduced to a color tone based on its natural color state can be displayed by the color liquid crystal display device.

Preferably, the aperture ratio of the R aperture is set in the range of 20 to 50%, the aperture ratio of the G aperture is set in the range of 15 to 40%, and the aperture ratio of the B aperture is set in the range of 16 to 45%. Further, a plurality of minute concave portions and convex portions is preferably formed on the surface of the transflective film.

According to the present invention, with respect to the human eye characteristics in that the color sensitivity to the light of the red color group is low, and the color sensitivity to the light of the green color group is high, the aperture ratios of the respective apertures formed in the transflective film are set such that the R aperture corresponding to the R color filter has the highest aperture ratio, the G aperture corresponding to the G color filter has the lowest aperture ratio, and the B aperture corresponding to the B color filter has the intermediate aperture ratio, so that the brightness of the respective colors is controlled in the order of G light > B light > R light.

According to such a construction, the three primary colors of R, G, and B that are fully color-developed are compensated to the brightness corresponding to the characteristics of the human eye, so that an image reproduced to a colour tone based on its natural colour state can be displayed by the colour liquid crystal display device.

An embodiment of the invention will now be described, by way of example only, with reference to the accompanying drawings, in which:
Fig. 1 is a sectional view of a colour liquid crystal display device according to the present invention;
Fig. 2 is an enlarged perspective view of a transflective film shown in Fig. 1;
Fig. 3 is an enlarged plan view of a pixel in the transflective film shown in Fig. 1;
Fig. 4 is a perspective view schematically illustrating a concave portion formed on the transflective film;
Fig. 5 is a sectional view illustrating the shape of an inner surface in the longitudinal section x of the concave portion shown in Fig. 4;
Fig. 6 is a graph illustrating an example of the reflection property of the transflective film;
Fig. 7 is an explanatory view illustrating the shapes of apertures corresponding to the respective colour filters of the transflective film according to the present invention; and
Fig. 8 is a graph illustrating the transmittance characteristics with respect to light wavelengths in the colour filter.

### DESCRIPTION OF THE PREFERRED EMBODIMENT

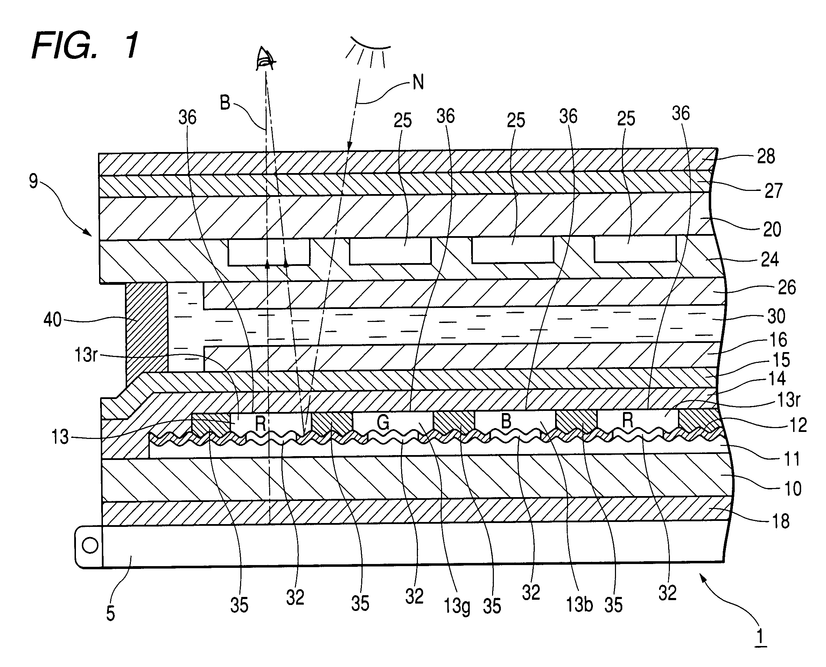

Hereinafter, the preferred embodiment of the present invention will be described with reference to the accompanying drawings. Fig. 1 is an enlarged sectional view schematically illustrating a color liquid crystal display device according to the present invention. A color liquid crystal display device 1 comprises a liquid crystal display panel 9 and a backlight 5, which is an illuminating device. The liquid crystal display panel 9 is formed by bonding a first substrate (a lower substrate) 10 to a second substrate (an upper substrate) 20 opposite to the first substrate 10, each composed of a glass substrate, with a liquid display layer 30 interposed therebetween, using a circular sealing material 40 provided at the peripheries of the two substrates 10 and 20.

An organic film 11 for forming concave portions 31 (dimples) on a transflective film 12, the transflective film 12 which reflects light incident on the color liquid crystal display device 1 or transmits light emitted from the backlight 5, color filters 13 for performing color display, an overcoat film 14 for coating the organic film 11 and the transflective film 12 to protect them and for flattening the unevenness caused by the organic film 11 and color filter 13, an electrode layer 15 for driving the liquid crystal layer 30, and an alignment film 16 for controlling the orientation of liquid crystal molecules constituting the liquid crystal layer 30 are formed on a surface of the first substrate 10 facing the liquid crystal layer 30 in this order. Further, an electrode layer 25, an overcoat film 24, and an alignment film 26 are formed on a surface of the second substrate 20 facing the liquid crystal layer 30 in this order.

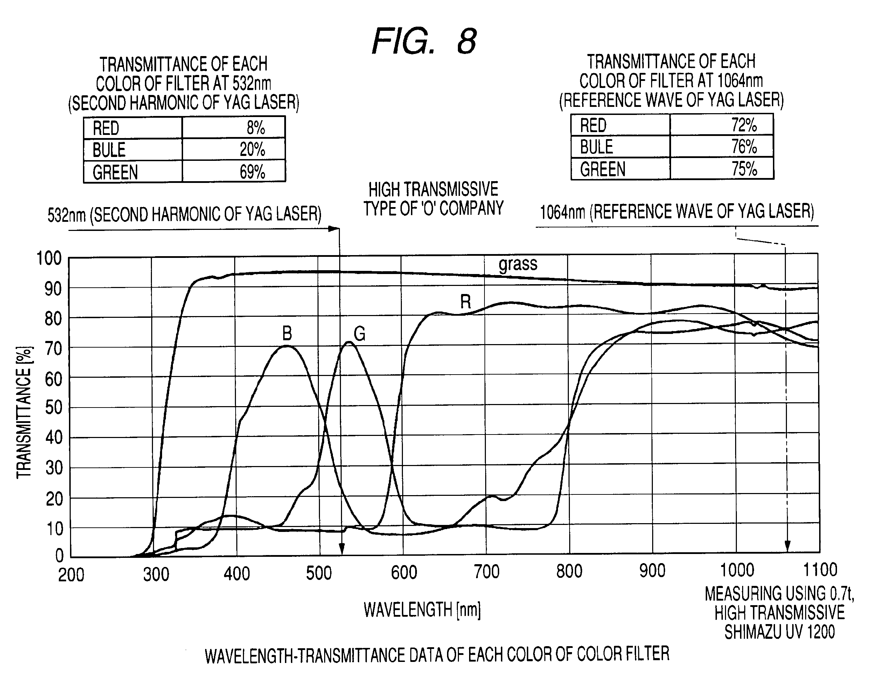

The color filter 13 is comprised of an R color filter 13r, a G color filter 13g, and a B color filter 13b that color-develop R, G and B colors, which are the three primary colors of light, respectively. The three-color filters may be formed by repeating a pattern process. As the R, G, and B color filters 13, the filers having the transmittance characteristics with respect to the wavelengths of light as illustrated in the graph shown in Fig. 8 are used. Further, a light-shielding wall 35, which is called black matrix, is formed to prevent the color mixture between adjacent color filers among the respective color filters 13r, 13g, and 13b. Regions divided by the light-shielding wall 35 constitute pixel regions 36.

A polarizing plate 18 is provided on a side of the first substrate 10 opposite to the liquid crystal layer 30 (an outer surface of the first substrate 10). A retardation plate 27 and a polarizing plate 28 are laminated in this order on a side of the second substrate 20 opposite to the liquid crystal layer 30 (an outer surface of the second substrate 20).

Further, the backlight 5, serving as an illuminating device for transmissive display in the color liquid crystal display device 1, is provided on an outer surface of the polarizing plate 18 of the first substrate 10.

The organic film 11 is provided for efficiently scattering reflected light by forming the concave portions 31 on the transflective film 12 that is formed on the organic film 11. Since external light incident on the color liquid crystal display device 1 is efficiently reflected by forming the concave portions 31 on the transflective film 12, it is possible to perform bright display at the time when illumination is performed by reflecting the external light.

For example, the transflective film 12 is composed of a thin film made of a metallic material having high reflectance, such as aluminum. Apertures 32 are formed in the transflective film 12 so as to correspond to the respective pixels of the liquid crystal display panel 9. The aperture 32 causes the light emitted from the backlight (an illuminating device) 5 to pass through the transflective film 12 composed of a thin metal film.

According to such a construction, in the case in which the color liquid crystal display device 1 is used outdoors in the daytime, when external light N is incident on the liquid crystal display panel 9, the incident light is reflected by reflective regions other than the apertures 32 of the transflective film 12 made of a thin metal film to brightly illuminate the liquid crystal display panel 9. On the other hand, in the case in which the color liquid crystal display device 1 is used in an environment where external light is insufficient, such as a dark room or night, the backlight 5 is turned on, and the illumination light B emitted from the back light 5 passes through the apertures 32 of the transflective film 12 to brightly illuminate the liquid crystal display panel 9. The color liquid crystal display device 1 can brightly illuminate the liquid crystal display panel 9 with high brightness by the operation of the transflective film 12 even when either of the external light and the backlight 5 is used as a light source.

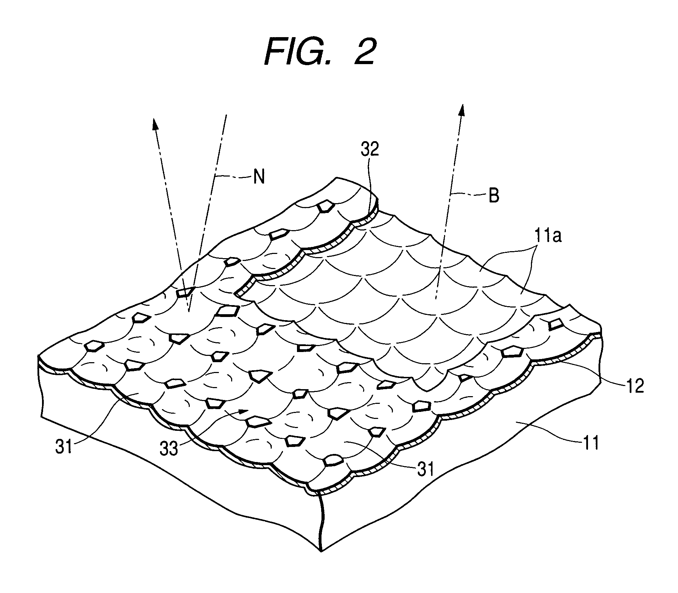

Fig. 2 is a perspective view illustrating a portion including the organic film 11 and the transflective film 12 formed on the organic film 11. As illustrated in Fig. 2, a plurality of concave portions 11a having the internal surface shape of a partial sphere is continuously formed so as to overlap each other on the left and right sides, and the transflective film 12 is formed on the surfaces of the concave portions 11a. Concave portions 31 are formed on the transflective film 12 by the concave portions 11a formed on the surface of the organic film 11. Further, rectangular-shaped apertures 32 are formed on portions of the transflective film 12. Such apertures 32 may be formed, for example, by an etching process.

Preferably, the depth of the concave portions 31 is randomly set in the range of 0.1 µm to 3 µm, the pitch between adjacent concave portions 31 is randomly set in the range of 5 µm to 50 µm, and the inclination angle of the inner surface of the concave portion 31 is set in the range of -30° to +30°. Particularly, it is important to set the distribution of the inclination angle in the range of -30° to +30° and to set randomly the pitch between adjacent concave portions 31 in all directions of the plane. This is because, when the pitch between adjacent concave portions 31 is regularly set, there is a problem in that the interference color of light appears, such that the reflected light is colored.

Further, when the distribution of the inclination angle of the inner surface of the concave portion 31 exceeds the range of -30° to +30°, the diffusion angle of the reflected light is excessively broaden, such that the reflection intensity decreases, which results in dark display (this is because, when the diffusion angle of the reflected light in the air is 36° or more, the reflection intensity peak inside the liquid crystal display device is lowered, such that the loss of a total reflection increases). Further, when the depth of the concave portion 31 exceeds 3 µm, in the subsequent process for flattening the concave portion 31, it is difficult to bury the peak of the convex portion by the flattening film (the overcoat film 14), such that the desired flatness cannot be obtained, which causes display irregularity.

When the pitch between adjacent concave portions 31 is less than 5 µm, there are problems in that the restriction to manufacture a transfer mold exists, which is used to form the organic film 11, the processing time is extremely lengthened, it is difficult to form a shape for obtaining the desired reflection property, and interference light appears. Further, in the process for making the transfer mold, when using a diamond indenter having a diameter of 30 µm to 100 µm, the pitch between adjacent concave portions 31 is preferably set in the range of 5 µm to 50 µm.

According to such a construction, in the transflective film 12, the illumination light B from the backlight 5 passes through the apertures 32, and it is possible to efficiently reflect the external light N from the reflective regions 33 in which the plurality of concave portions 31 is formed.

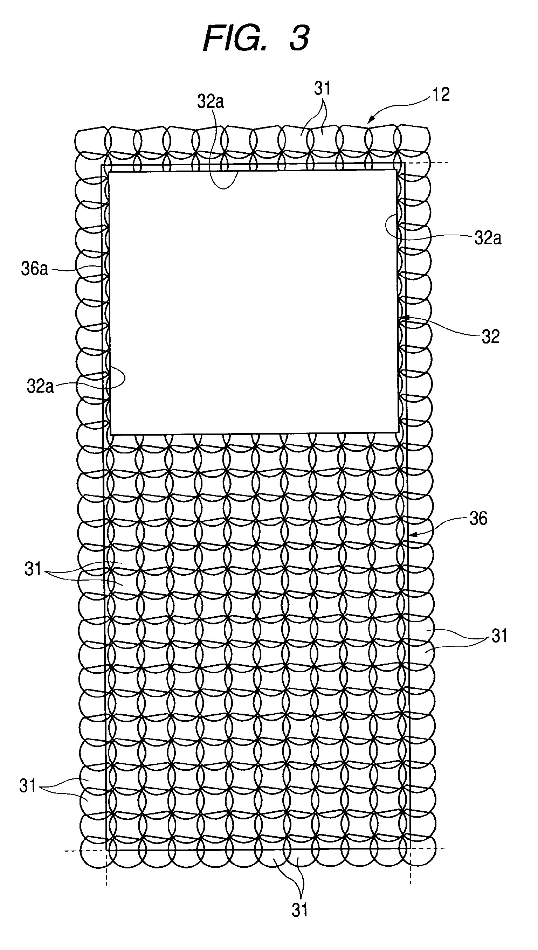

Fig. 3 is an exploded plan view illustrating the detailed shape of one pixel region as seen from the upper surface of the transflective film shown in Fig. 2. The aperture 32 may be positioned near the edge 36a of the rectangular-shaped pixel region 36. It is preferable that three sides 32a of the four sides of the rectangular-shaped aperture 32 be positioned near the edge 36a of the pixel region 36.

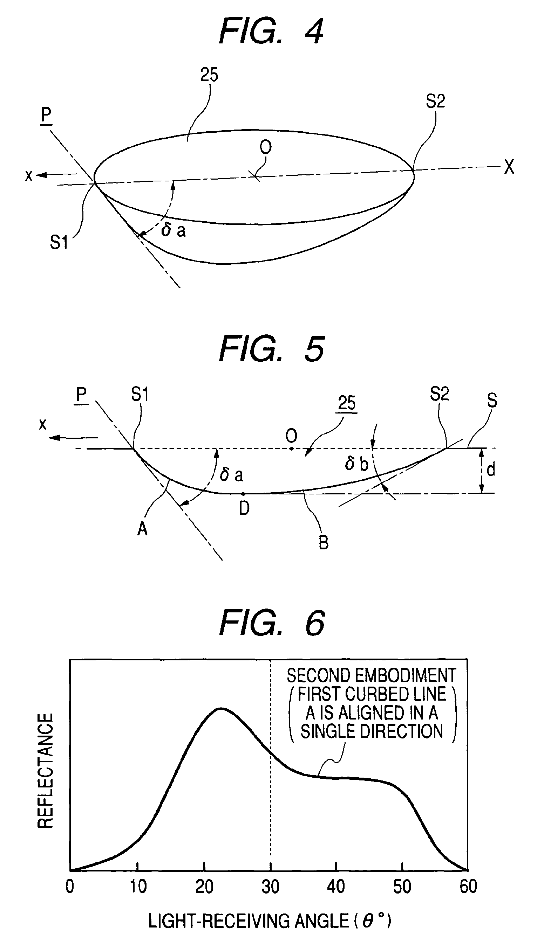

As illustrated in Fig. 4, in the specific longitudinal section X of the concave portion 31 which is formed on the transflective film 12, the shape of an inner surface thereof is a curved line comprised of a first curved line A extending from a peripheral portion S1 of the concave portion 31 to a deepest point D and a second curved line B continuously extending from the deepest point D of the concave portion 31 to a peripheral portion S2. At the deepest point D, the curved lines A and B each have the inclination angle of zero with respect to a flat surface S, and are connected to each other.

The inclination angle of the first curved line A with respect to the flat surface S is larger than the inclination angle of the second curved line B with respect to the flat surface S, such that the deepest point D deviates from the center O in the x direction. That is, the average absolute value of the inclination angle of the first curved line A with respect to the flat surface S is larger than the average absolute value of the inclination angle of the second curved line B with respect to the flat surface S. In the present embodiment, it is preferable that the average absolute value of the first curved line A constituting each concave portion 31 irregularly vary in the range of 1° to 89°. Further, it is preferable that the average absolute value of the second curved line B constituting each concave portion 31 irregularly vary in the range of 0.5° to 88°.

Since the inclination angle of the curved line B is more smoothly changed than the inclination angle of curved line A until they reach the deepest point D from the peripheral portion of the concave portion 31, a maximum inclination angle δa (an absolute value) of the first curved line A is larger than a maximum inclination angle δb of the second curved line B. Further, the inclination angle of the deepest point D at which the first and second curved line A and B are connected to each other with respect to the flat surface S is zero, such that both curved lines A and B respectively having the positive and negative inclination angles are smoothly connected to each other at the deepest point D.

For example, the maximum inclination angle δa of the respective concave portions 31 irregularly varies in the range of 2° to 90°. However, in many concave portions 31, the maximum inclination angle thereof irregularly varies in the range of 4° to 35°. Further, in the concave portion 31 shown in Figs. 4 and 5, the concave surface thereof has a single minimum point D (a point on the curved surface at which the inclination angle is zero). The distance between the minimum point D and the flat surface S is the depth d of the concave portion 31. In the plurality of concave portions 31, the depth d irregularly varies in the range of 0.1 to 3.0 µm.

The first curved line A of the plurality of concave portions 31 is preferably oriented in a single direction. According to such a construction, the direction of the light reflected from the transflective film 12 can be moved to a specific direction from the direction of specular reflection. As a result, in the overall reflection characteristics of a specific longitudinal section, the reflectance in a direction reflected by the peripheral surface of the second curved line B increases, and the reflected light is concentrated in a specific direction. Fig. 6 illustrates the relationship between a light-receiving angle and brightness (reflectance) when external light is incident on the transflective film in which the first curved line A of the concave portion 31 is oriented in a single direction at an incident angle of 30°, and the light-receiving angle is varied from the position of a vertical line of the transflective film (0°) to 60° with an angle 30°, which is the direction of specular reflection with respect to the flat surface S, as the center.

As can apparently be seen from Fig. 6, in the transflective film in which the first curved line A is oriented in a single direction, the refection characteristic is high in the angle range of 20° to 50°. And, the integral value of the reflectance at a light-receiving angle of 30° or less, which is a specular reflection angle with respect to the flat surface S, is larger than the integral value of the reflectance at a light-receiving angle more than the specular reflection angle. That is, high reflectance can be obtained at a light-receiving angle of about 20°.

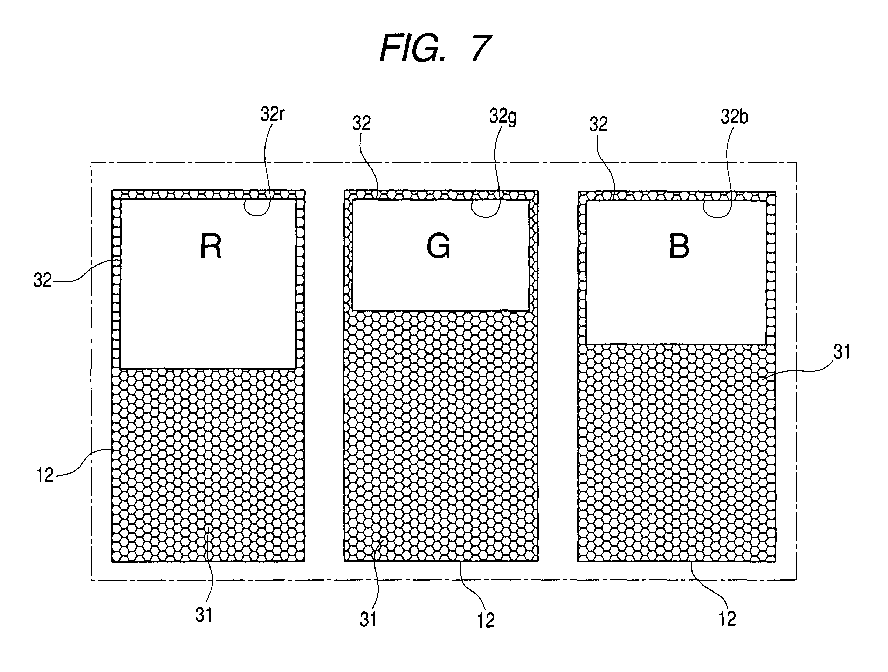

Fig. 7 is an explanatory view showing the correspondence of the respective color filters and the apertures of the transflective film. In the apertures 32 formed in the respective pixel regions in the transflective film 12, the aperture ratios of the apertures 32 vary for the R, G, and B color filters 13r, 13g, and 13b (see Fig. 1). An aperture ratio indicates an area ratio of an aperture 32 to a rectangular-shaped display region 36. That is, the aperture ratio is a ratio of a portion contributing to the transmission of illumination light emitted from the backlight 5 with respect to one pixel region 36. When the aperture ratio increases, the illumination light emitted from the backlight 5 largely passes through the aperture, thereby raising brightness.

As illustrated in Figs. 1 and 7, in the transflective film 12 constituting the color liquid crystal display device 1 of the present invention, an R aperture 32r corresponding to the R color filter 13r has the largest size, a G aperture 32g corresponding to the G color filter 13g has the smallest size, and a B aperture 32g corresponding to the B color filter 13b has an intermediate size. That is, the aperture ratios of the apertures 32 formed on the transflective film 12 satisfy the following relationship: the R aperture 32r > the B aperture 32b > the G aperture 32g. This corresponds to the fact that the visibility of the human eye decreases in the order of G > B > R. The aperture ratio is preferably set so as to compensate such a difference.

Since the size of the aperture 32 changes in accordance with the color of the corresponding color filter, the brightness of an R colored light that is color-developed by the R color filter 13r increases, and the brightness of a G colored light that is color-developed by the G color filter 13g decreases.

As an example of the aperture ratio of the aperture 32, the aperture ratio of the R aperture 32r corresponding to the R color filter 13r may be set in the range of 20 to 50%, the aperture ratio of the G aperture 32g corresponding to the G color filter 13g may be set in the range of 15 to 40%, and the aperture ratio of the B aperture 32b corresponding to the B color filter 13b may be set in the range of 16 to 45%, respectively. More preferably, the aperture ratio of the R aperture 32r corresponding to the R color filter 13r may be set in the range of 30 to 45%, the aperture ratio of the G aperture 32g corresponding to the G color filter 13g may be set in the range of 20 to 35%, and the aperture ratio of the B aperture 32b corresponding to the B color filter 13b may be set in the range of 25 to 40%, respectively.

Generally, the human eye has characteristics in that the sensitivity to the light of a red color group is low, and the sensitivity to the light of a green color group is high. Thus, when the three primary colors of R, G, and B are colored by the color liquid crystal display device in the same brightness, the color in the red color group is perceived darker than its actual brightness, such that there is a color that cannot be seen in its natural color state. However, by forming the apertures 32 on the transflective film 12 such that their aperture ratios satisfy the relationship of the R aperture 32r > the B aperture 32b > the G aperture 32g, the quantity of light of the illumination light transmitted from backlight 5 varies, thereby controlling the brightness of each color so as to satisfy the relationship of R light > B light > G light.

According to such a construction, the three primary colors of R, G, and B that are fully color-developed are compensated to the brightness corresponding to the characteristics of the human eye, such that an image reproduced to a color tone based on its natural color state can be displayed by the color liquid crystal display device 1.

Further, according to the present embodiment described above, the concave portions are formed on the transflective film. However, even when a plurality of minute convex portions may be formed on the transflective film, the same effects as described above can be obtained.

## Claims

1. A colour liquid crystal display device comprising: a liquid crystal display panel in which each pixel has at least one of an R filter, a G filter, and a B filter for colouring three primary-colour light components of R, G and B, respectively;
an illuminating device for illuminating the liquid display panel from a rear side thereof; and
a transflective film formed outside or inside the liquid display panel and having apertures for transmitting light at positions corresponding to the respective pixels of the liquid crystal panel,
wherein the transflective film is formed such that, with respect to the aperture ratio of each pixel, an R aperture corresponding to the R colour filter has a highest aperture ratio, a G aperture corresponding to the G colour filter has a lowest aperture ratio, and a B aperture corresponding to the B colour filter has an intermediate aperture ratio.

2. The colour liquid crystal display device according to claim 1,
wherein the aperture ratio of the R aperture is set in the range of 20% to 50%, the aperture ratio of the G aperture is set in the range of 15% to 40%, and the aperture ratio of the B aperture is set in the range of 16% to 45%.

3. The colour liquid crystal display device according to claim 1 or 2,
wherein the transflective film has a plurality of minute concave portions or convex portions on a surface thereof.

4. The colour liquid crystal display device according to claim 3,
wherein the depth of the concave portion is randomly set in the range of 0.1 µm to 3 µm, and a pitch between the concave portions is randomly set in the range of 5 µm to 50 µm.

5. The colour liquid crystal display device according to claim 3 or 4,
wherein, in a specific longitudinal section of the concave portion, an inner surface of the concave portion is comprised of a first curved line extending from a peripheral portion of the concave portion to its deepest point and a second curved line continuously extending from the deepest point of the concave portion to another peripheral portion, and
wherein an average absolute value of an inclination angle of the first curved line with respect to the surface of the transflective film is larger than an average absolute value of an inclination angle of the second curved line with respect to the surface of the transflective film.

6. The color liquid crystal display device according to claim 5,
wherein the first curved line is oriented in a single direction.

7. The color liquid crystal display device according to claim 3,
wherein, in the transflective film, an integral value of a reflectance at a light-receiving angle less than an angle of specular reflection with respect to incident light which is incident at a predetermined angle is larger than an integral value of a reflectance at a light-receiving angle more than the angle of the specular reflection.
